# EUROPEAN PATENT SPECIFICATION

(11) **EP 3 975 692 B1**
(45) Date of publication and mention of the grant of the patent: **06.09.2023**
(21) Application number: 20728231.0
(22) Date of filing: 27.05.2020
(51) Int. Cl.: A01F 25/20, A01F 29/04, A01F 29/22

(54) **BALER WITH KNIFE PROTECTION SYSTEM**
BALLENPRESSE MIT MESSERSCHUTZSYSTEM
PRESSE À BALLES DOTÉE D'UN SYSTÈME DE PROTECTION DE LAME

(30) Priority: 30.05.2019 IT 201900007623
(43) Date of publication of application: 06.04.2022
(73) Proprietor: Kverneland Group Ravenna S.r.l., 48026 Russi (RA) (IT)
(72) Inventor: VARLEY, Seamus, Dublin 6W (IE)
(74) Representative: Conti, Marco
(86) International application number: PCT/IB2020/055013
(87) International publication number: WO 2020/240428

(56) References cited:
- EP-A1- 1 882 407
- EP-A1- 3 050 426
- EP-A1- 3 275 303
- CN-B- 106 258 241
- DE-A1-102011 013 640
- DE-A1-102013 007 303
- DE-U1-202017 104 191

## Description

### Technical field

This invention relates to an agricultural machine and to a method for operating an agricultural machine.

In particular, this disclosure relates to agricultural machines such as round balers, square balers, forage wagons or trailers. These machines typically include a feeding system for collecting crops from a field and feed them to a receiving unit such as a baling chamber; also, these machines include a cutting or chopping unit provided with knives configured to cut the crops advancing through the feeding system.

### Background art

During the cutting operations, the crops picked-up from the field may include harder objects, such as rocks, that may damage the knives of the cutting unit. Hence, it is necessary that the knife retracts from a feeding channel of the feeding system, allowing the passage of the object and avoiding to be damaged.

The document EP2653025B1 discloses a cutting device for agricultural crops. This document describes a plurality of knife protection system, each one dedicated to a respective knife. Therefore, each knife is individually retracted when it impacts with a harder object.

EP2653025B1 discloses a spring, configured to urge the respective knife in extracted position till the knife impacts the object. The impact produces the retraction of the knife and a compression of the respective spring. When the object has passed the knife, the spring urges again the knife to the extracted position. However, this solution is highly responsive to the impact, in fact the impact force needed to overcome the spring force increase with the dimension of the object passing through the channel.

The document EP1584226B1 discloses a cutting device for agricultural crops.

EP1584226B1 discloses a hydraulic cylinder, configured to urge the respective knife in extracted position till the knife impacts the object. The hydraulic cylinder is connected to a first arm, rotating with a safety shaft. Each knife is connected to a respective second arm, rotating with the safety shaft. The impact produces the retraction of the knife, the rotation of the second arm, the rotation of the first arm and a compression of the hydraulic cylinder. When the object has passed the knife, the hydraulic cylinder urges again the knife to the extracted position.

This document describes a single knives protection system, configured to retract simultaneously all the knives in response to the impact of a harder object.

The system described in EP1584226B1 is not selective and causes the presence of significant amount of uncut crops even when a small object impact a single knife.

Another example of a known agricultural machine is provided by patent documents EP3275303A1 and DE19832463.

### Disclosure of the invention

Scope of the present invention is to overcome the aforementioned drawbacks. This scope is achieved by the baler or loading wagon of claim 1 and the method for recover crops of claim 13 that overcomes at least one of the aforementioned drawbacks. Preferred embodiments are presented in the dependent claims.

It is here observed that the machine and/or the method according to the present description provides several advantages.

Firstly, it provides a knife protection system that protects individually the plurality of knives. Moreover, it discloses the knife protection system with a specific geometry thanks to which the forces to push or retract the knife down into the floor unit slots will reduce as the knife rotates and retracts into the down position.

Also, it provides a knife protection system having, for each knife, a lever that engages a respective knife hook (safety guide) or encircled zone in order to physically push the respective knife up into the extracted position with forces acting on the bottom side of the cutting knife, in such a way that the upward forces (the force that keep the knife in the extracted position) while increases linearly as the cutting knife rotates towards the extracted position. Moreover, it provides physical contact of the knife protection system with the knife's hook (safety guide) and or encircled zone to provide positive forces to push or retract the knife back down into the drop floor slots into the retracted position.

In addition to that, it provides a knife protection system that reduces the knife retraction forces by the knife trigger engagement roller (driving point) thanks to the effect of: moving closer to the knives rotation point during the cutting knife retraction and reducing linearly the lever arm of the trigger mechanism (lever) as the spring force (absorber element) increases linearly.

### Brief description of drawings

This and other features of the invention will become more apparent from the following detailed description of a preferred, non-limiting example embodiment of it, with reference to the accompanying drawings, in which:
- Figure 1 illustrates a baler for providing bales;
- Figures 2A and 2B illustrate a knife protection system with the respective knife in extracted position and in retracted position, respectively;

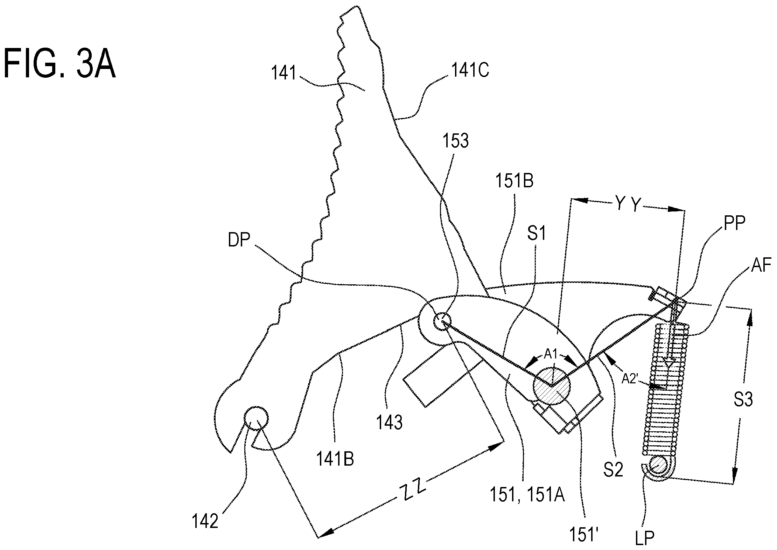

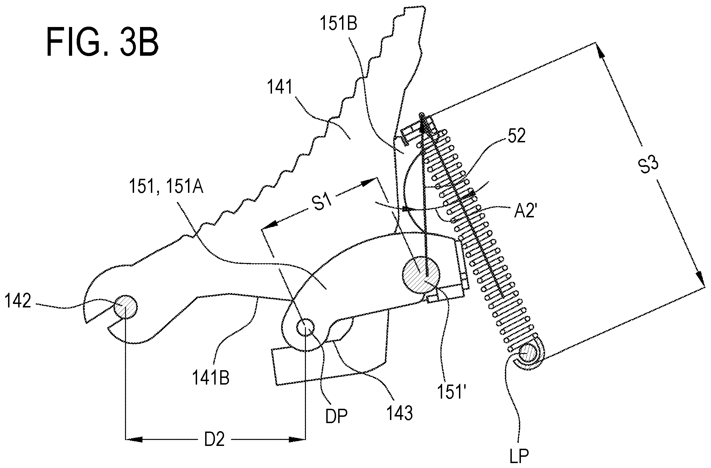

- Figures 3A and 3B illustrate other views of the knife protection system with the respective knife in extracted position and in retracted position, respectively.

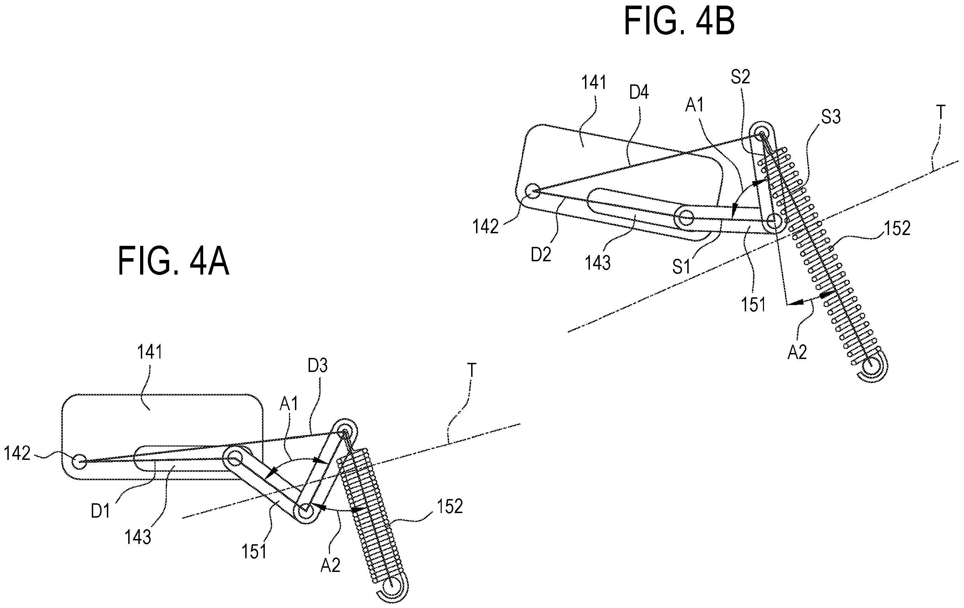

- Figures 4A and 4B illustrate schematic views of the knife protection system of figure 2A and 2B, respectively.

### Detailed description of preferred embodiments of the invention

With reference to the accompanying drawings, the numeral 1 denotes an agricultural machine, according to the present disclosure. In particular, the agricultural machine 1 which is illustrated in the accompanying figures is a baler connectable to a tractor for providing round bales.

The machine 1 includes a receiver 11 for receiving crops. In particular, the receiver 11 is defined by a baling chamber. In an embodiment, the receiver 11 includes a first part 11' for housing a first amount of crops, and a second part 11", for housing a second amount of crops. The receiver 11 includes a plurality of rollers 111, delimiting the baling chamber 11 (in particular, delimiting the first part 11' and the second part 11 "). The plurality of rollers 111 are configured to rotate the crops housed in the baling chamber, to form the bale. In an embodiment, the rollers 111 of said plurality have a fixed position. The receiver 11 comprises lateral walls; the rollers 111 of said plurality may be fixed to the lateral walls of the receiver 11.

The machine 1 may comprise one or more starter rollers 112. The starter rollers 112 are configured to start a rotation of the crops. In an embodiment, the machine 1 comprise a frame 10; the frame 10 may be fixed or movable; the starter rollers 112 are mounted on said frame 10. Hence, the starter rollers 112, in an embodiment, have a fixed position; in another embodiment, the starter rollers 112 are movable with respect to the rollers 111.

The machine 1 comprises a pick-up device 12, configured for picking-up the crops from a field. The pick-up device 12 includes a pick-up roll.

The machine 1 comprises a feeding assembly 13.

The feeding assembly 13 is configured to guide the crops from the pick-up device 12 to the receiver 11 along a feeding path P. The feeding assembly 13 includes a feeding rotor 132, rotatable about a rotation axis. The feeding assembly 13 includes a feeding channel 131. The feeding channel 131 extends between an inlet 131A and an outlet 131B. The inlet 131A faces the pick-up device 12. The outlet 131B defines an opening in the receiver 11. The feeding rotor 132 is positioned along the feeding channel 131, downstream of the inlet 131A and upstream of the outlet 131B.

The feeding assembly 13 includes a feeding frame 133. The feeding frame 133 defines a (portion of) a top side of the feeding channel 131. The feeding frame 133 is connected to the feeding rotor 132. In an embodiment, the feeding rotor 132 and the feeding frame 133 are separately rotatable about a rotation axis of the feeding rotor 132. In particular, the feeding rotor 132 is rotatable about the rotation axis to advance the crops through the feeding channel 131.

The feeding assembly 13 includes a bottom floor (drop floor) 131C, defining a (portion of) a bottom side of the feeding channel 131. The bottom floor 131C is positioned between the inlet 131A and the outlet 131B of the feeding channel 131. The feeding rotor 132 is positioned above said drop floor device 131C.

In one embodiment, the bottom floor 131C includes a plurality of slots 131C'. The plurality of slots 131C' are mainly elongated along the feeding path P.

The machine 1 comprises a cutting assembly 14. The cutting assembly 14 is configured to cut the crops passing trough the feeding channel 131.

The cutting assembly 14 is associated with the bottom floor 131C, preferably it is connected to it. The cutting assembly comprises a cutting frame 14', connected to the bottom floor 131C.

The cutting assembly 14 comprises a plurality of knives 141.

Each knife 141 is inserted into a respective slot 131C' of the bottom floor 131C. Each knife 141 is movable into the respective slot 131C', preferably the knife is configured to slide into the respective slot 131C'.

In one embodiment, each knife 141 is connected to the cutting frame 14' in a respective knife rotation point 142. The knife rotation point 142 is fixed with respect to the cutting frame 14'. Each knife 141 is pivoting around the respective knife rotation point 142, between an extracted position E, where the knife 141 is at least partially inserted into a respective slot 131C' of the bottom floor 131C to protrude (project into) towards the feeding channel 131, and a retracted position R, where the knife 141 is retracted below the bottom floor 131C. In one embodiment, each knife 141 is configured to slide into the respective slot 131C' pivoting around the knife rotation point 142.

Each knife 141 has a cutting side 141A, a bottom side 141B, a lateral side 141C. Each knife 141 has a first vertex 141', between the cutting side 141A and the lateral side 141C, a second vertex 141", between the cutting side 141A and bottom side 141B and a third vertex 141‴, between the bottom side 141B and the lateral side 141C. In one embodiment, the knife rotation points 142 is placed on the second vertex 141".

Each knife comprises has a front face 141F and a back face.

Each knife comprises a safety guide 143. The safety guide 143 is placed on the bottom side 141B of the respective knife 141. In one embodiment, the safety guide 143 has a hook profile.

In one embodiment, for each knife 141 of the plurality of knife 141, the machine 1 comprises a knife protection system 15.

The knife protection system 15 is configured to properly move the respective knife 141, in order to avoid damage of the same. Each knife protection system 15 is configured to retract the respective knife 141 (selectively) in response to an external force FE applied to the respective knife 141. In other words, each knife protection system 15 is configured to allow the lowering of the respective knife 141 from the feeding channel 131 when some object applies the external force FE to the knife 141.

In one embodiment, each knife protection system 15 includes a lever 151.

The lever 151 is rotating around a rotation point 151'. The lever 151 is connected to the respective knife 141 in a driving point DP. The driving point DP can be a contact point between the lever 151 and the respective knife 141. The rotation point 151' is fixed with respect to the cutting frame 14'.

The lever 151 has a first arm 151A and a second arm 151B. The first arm 151A is connected to the respective knife in the driving point DP.

In one embodiment, the driving point DP is on the safety guide 143. The driving point DP is on the bottom side 141B of the respective knife 141.

The first arm 151A faces the front face 141F while the second arm 151B faces the back face of the respective knife 141.

In one embodiment, the knife protection system 15 comprises a knife selector mechanism 154. The knife selector mechanism 154 comprises a plurality of teeth 154', that may be engaged with the lever 151 for selectively select a knife 141 of the plurality.

The teeth 154' of the knife selector mechanism 154 are configured to be coupled with the lever 151, in order to limit the movement of the lever 151.

In particular, the knife protection system is movable between an activated configuration, wherein the lever 151 is free to rotate around the rotation point 151', and a limited configuration, wherein the rotation of the lever 151 is limited by the teeth of the knife selector mechanism 154. The knife selector mechanism 154 allows to selectively activate or deactivate the knife protection system 15 of each knife 141.

Each knife protection system 15 comprises an absorber element 152. The absorber element 152 is connected to the lever 151 in a pushing point PP. The absorber element 152 is connected to the cutting frame 14' in a locking point LP.

The absorber element 152 is configured to apply an absorption force AF on the lever 151 to urge the respective knife 141 towards the extracted position E.

In one embodiment, the absorber element 152 is a traction spring, configured to apply a force directed towards the locking point LP to urge the respective knife 141 towards the extracted position E.

In one embodiment, the absorber element 152 is connected to the second arm 151B of the lever 151.

For the clarity of the present disclosure, the following geometric entity are defined:
- driving segment S1: segment between the driving point DP and the rotation point 151';
- pushing segment S2: segment between the pushing point PP and the rotation point 151';
- action segment S3, segment between the pushing point PP and the locking point LP;
- transversal direction T, perpendicular to the direction of the absorption force AF;
- first distance D1, distance between the driving point DP and the knife rotation point 142 in the extracted position E of the respective knife;
- second distance D2, distance between the driving point DP and the knife rotation point 142 in the retracted position R of the respective knife;
- third distance D3, distance between the pushing point PP and the knife rotation point 142 in the extracted position E of the respective knife;
- fourth distance D4, distance between the pushing point PP and the knife rotation point 142 in the retracted position R of the respective knife;
- amplification angle A1, angle between the driving segment S1 and the pushing segment S2;
- lever angle A2, angle between the pushing segment S2 and the action segment S3.
- first value A2' of the lever angle A2, that is the value of the lever angle with knife 141 in the extracted position E.
- second value A2" of the lever angle A2, that is the value of the lever angle with knife 141 in the retracted position R.

With reference to the above definitions, in one embodiment, the second distance is smaller than the first distance. In one embodiment, the fourth distance is smaller than the third distance.

In one embodiment, the amplification angle A1 and the lever angle A2 are greater than zero.

In embodiment, the first value A2' of the lever angle A2 is greater than the second value A2" of the lever angle A2.

In one embodiment, the driving point DP is movable along a safety trajectory. The safety trajectory is defined by the safety guide 143. In particular, the first arm 151A of the lever 151 includes a coupling extremity, engaged in the hook profile.

The coupling extremity slides into the hook profile keeping contact with the bottom side 141B of the respective knife 141. The contact point between the coupling extremity and the bottom side 141B of the knife 141 defines the driving point DP.

In one embodiment, the coupling extremity includes a roller 153, configured to rotates while the coupling extremity slides into the safety guide 143.

In one embodiment, the rotation points 151' is between the pushing point PP and the driving point DP along a transversal direction T (in the retracted position (R) and/or in the extracted position (E) of the knife).

In one embodiment, the amplification angle (A1) is greater than 45°. In one embodiment, the amplification angle (A1) is greater than 30°. In one embodiment, the amplification angle (A1) is greater than 15°.

In one embodiment, the lever angle A2 is variable with the position of the respective knife 141. In particular, the lever 151 and the absorber element 152 are spaced in such a way that the lever angle A2 decrease as the knife 141 moves towards the retracted position R.

In one embodiment, an elongation of the absorber element 152 is smaller in the extracted position E of the knife 141, than in the retracted position R of the knife 141. In fact, the external force FE needed to get a certain elongation increase with the total elongation of the absorber element.

According to an aspect of the present disclosure, it also provides a method for recover crops with an agricultural machine 1.

The method comprises a step of receiving crops into a receiver 11 (such as a bailing chamber). The method comprises a step of picking-up corps from a field with a pick-up device 12.

The method comprises a step of feeding the crops to the receiver 11 throughout a feeding channel 131, having an inlet 131A, for receiving the crops from the pick-up device 12, an outlet 131B, opened to the receiver 11 for feeding the crops to the receiver 11 along a feeding path P.

In one embodiment, the step of feeding crops includes a step of pushing crops, with a feeding rotor 132. In the step of pushing crops, the feeding rotor 132 rotates to push the crops into the feeding channel 131. The feeding channel 131 includes a bottom floor 131C, including a plurality of slots 131C'.

In one embodiment, the method comprises a step of cutting the crops passing through the feeding channel 131 with a plurality of knife 141 (or with a cutting assembly 14).

In one embodiment, the method comprises, for each knife of the plurality 141, a respective step of pivoting around a respective knife rotation point 142. In the step of pivoting, each knife slides into the respective slot of the plurality 131C'.

In the step of pivoting, each knife 141 pivots between an extracted position E, where the knife 141 is at least partially inserted into a respective slot 131C' of the bottom floor 131C to protrude towards the feeding channel 131, and a retracted position R, where the knife is retracted below (or partially below) the bottom floor 131C.

In one embodiment, the method comprises, for each knife of the plurality 141, a respective step of protecting the knife 141 with a correspondent knife protection system 15. Each knife protection system 15 retracts the respective knife 141, selectively with respect to the other knives of the plurality of knives 141, in response to an external force FE.

Each protecting step includes a step of rotating a lever 151, connected to the respective knife in a driving point DP, around a rotating point 151'.

Each protecting step includes a step of urging the respective knife 141 towards the extracted position E with an absorber element 152, connected to a cutting frame 14' in a locking point LP. The absorber element 152 applies an absorption force AF on the lever 151 in a pushing point PP. In one embodiment, in the step of urging, the absorber element 152 is a traction spring, that applies the absorption force AF towards the locking point LP.

In one embodiment, the method comprises a step of approaching, in which, for each knife protection system 15, as the knife 141 moves from the extracted position E towards the retracted position R, the driving point DP approaches to the knife rotation point 152. In the step of approaching, for each knife protection system, as the knife 141 moves from the extracted position E towards the retracted position R, the pushing point PP approaches to the knife rotation point 142.

In one embodiment, In the step of approaching, for each knife protection system 15, as the knife 141 moves from the extracted position E towards the retracted position R, both the driving point DP and the pushing point PP approach to the knife rotation point 142.

In one embodiment, the step of knife protecting includes a step of sliding, wherein the driving point DP moves on the respective knife following a safety trajectory. In one embodiment, the step of knife protecting includes a step of guiding, wherein a respective safety guide 143 of the knife 141, defining the correspondent safety trajectory, houses the lever 151 for guiding the driving point DP along the respective safety trajectory.

In one embodiment, in the step of protecting, a lever of the absorption force AF with respect to the rotation point 151' decrease as the knife 141 moves towards the retracted position R.

In one embodiment, in the step of guiding, the driving point DP follows the safety trajectory in a bottom side 141B of the knife 141. In particular, in the step of guiding, a coupling extremity of the lever 151 slides into a hook profile (safety guide 143) of the respective knife 141.

In one embodiment, the rotation points 151' remains, along a transversal direction T (in the retracted position (R) and/or in the extracted position (E) of the knife), between the pushing point PP and the driving point DP.

In the following, a description of exemplary embodiments of the machine 1 is provided. According to one aspect of the disclosure, the machine 1 is a baler of the non-stop type with a pre-chamber (first part) 11" and a main chamber (second part) 11', a pickup device 12, a floor unit (bottom floor) 131C and a cutting assembly 14 forming a feeding channel 131 to feed crop into the main chamber 11' and or the pre-chamber 11". The cutting assembly 14 comprises (for each knife of the plurality 141) of a knife protection system 15 in which the knife 141 pivots around a pivot point (knife rotation point) 142. The cutting assembly 14 comprises a knife trigger mechanism with a lever 151 pivoting around a rotation point 151' tensioned by a spring 152 hooked at the driving point DP and the locking point LP. The cutting assembly 14 comprises a roller 153 attached to the coupling extremity of the lever 151 in the driving point DP engaging the knife in the safety guide 143 to forcefully move the knife 141 in the extracted position E and into a retracted position R. The rotational movement of the knife trigger mechanism (lever 151 and spring 152) in one rotational direction (in the direction towards the retracted position R) results with the roller 153 moving closer to the knives rotation point 142 and to the pushing point PP of the springs moves in a direction closer to the knife rotation point 142.

The knife protection system 15 doubly decreases the forces by means of the spring 152, the lever 151 but also with the roller 153 that moves closer to the knife rotation point 142. On the other hand, when forcefully moving the knife into the extracted position E, the forces are doubly by means of the spring 152, the lever 151 but also with the roller 153 that moves moving further away from the knife rotation point 142, maximizing the knife engagement forces.

In another aspect of the disclosure, the roller 153 are encompassed by the knife's hooking zone defined by a hook type shape enabling the lever 151 (the roller 153) to contact the knife 141 in the hooking zone for moving/ forcing the knife 141 into the extracted position E and/or the retracted position while the lever 151 is always in contact with the knife 141 within the knife's hooking zone (safety guide) 143.

In another aspect of the disclosure, the trigger mechanism (lever 151), its arms (151A, 151B) and the pushing point PP rotate in a direction resulting with the lever arm distance of the pushing point PP with respect to the rotation point 151' being reduced as the trigger mechanism 151 rotates and pushes the knife 336 into the retracted position R. Instead, the lever arm distance of the pushing point PP increases as the trigger mechanism (lever 151) rotates and pushes the knife 141 into the extracted position E.

According to another aspect of the disclosure, during the rotation of the trigger mechanism 151 through rotation point 151', a first dimensional value ZZ and a second dimensional value YY are directly proportional to each other. In particular, when rotation results in the trigger mechanism 15 pushing the knife in the extracted position E, the first dimensional value ZZ and the second dimensional value YY increase relative to each other. Om the other hand, when rotation results in the trigger mechanism pushing the knife in the retracted position R, the first dimensional value ZZ and the second dimensional value YY decrease relative to each other.

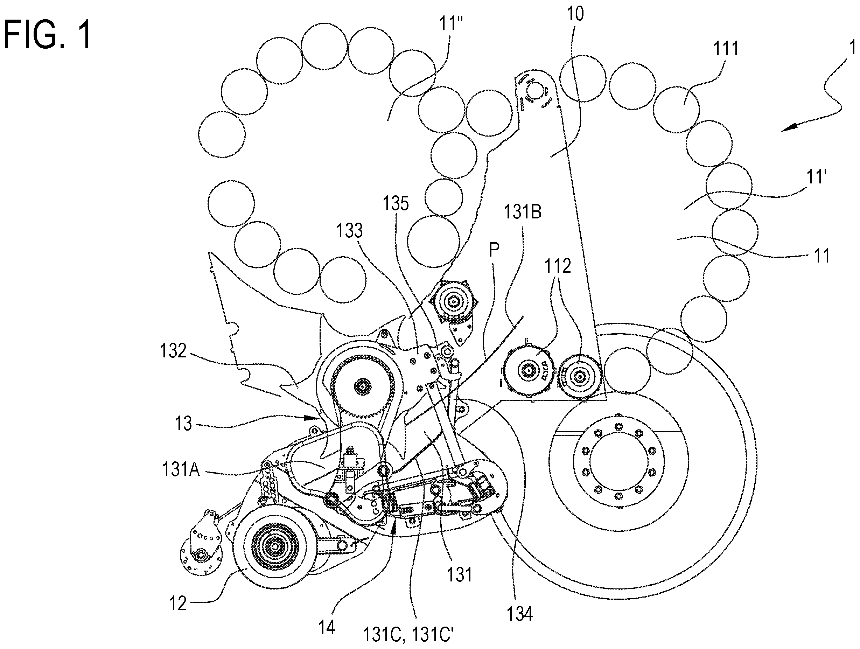

Figure 1 illustrates a section view through the side of the baling machine 1 and shows the machines bottom floor 131C and cutting assembly 14 in the up and working position. The deflector plate mechanism 134 is in the down position to feed crop through the pickup device 12 and through the feeding rotor 133 through the feeding channel 131 and into the main chamber 11'. The scraper mechanism 135 is also in the down and working position for crop feeding into the main chamber 11'.

The cutting assembly 14 includes: the cutting knife 141, the knife's hooking zone (safety guide) 143 in which the cutting unit trigger mechanism (lever 151) with roller 153 engages the knife in the hooking zone and the trigger mechanism spring (absorber element) 152 to provide a force on the knife 141 in the knife's hooking zone 143 to maintain the knife 141 in the extracted position E while grass is being pushed through the knife 141. The trigger mechanism is configured to deactivate the lock in the knife's hooking zone 143 when a peak force (external force FE) from a foreign object is forced through the cutting knives 141 by the feeding rotor 133.

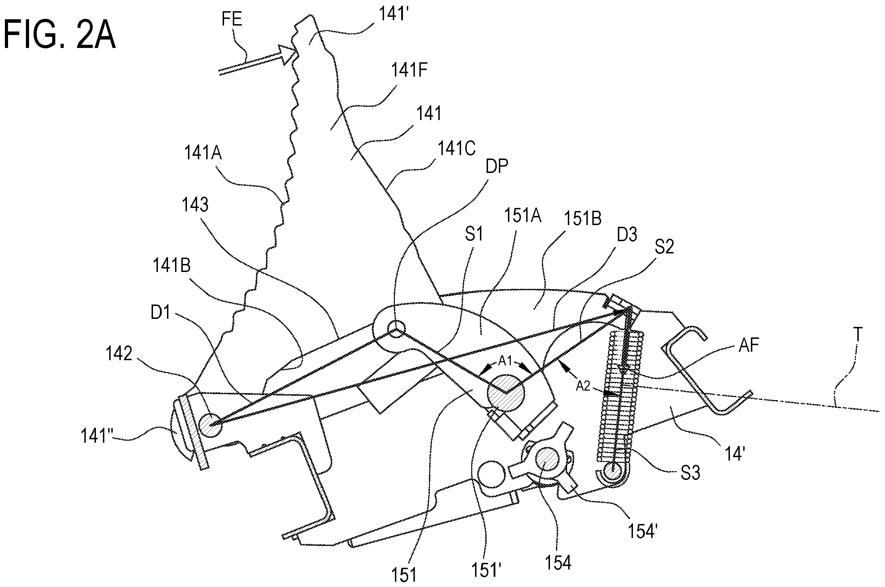

Figure 2A illustrates the cutting assembly 14, the knife 141 and trigger mechanism 151 from the cutting assembly 14. The knife 141 is shown is the extracted position. The trigger mechanism 151 is in a rotated-up position at the largest distance away from the knife's rotation point 142 but crucially it is within the knife's hooking zone 143 for the pushing of the knife up and down. The spring 152 is in a packed configuration.

In this case the knife selector 154 is in an inactive position and therefore the trigger mechanism 151 is free to rotate around the rotation point 151' into the up and active working position.

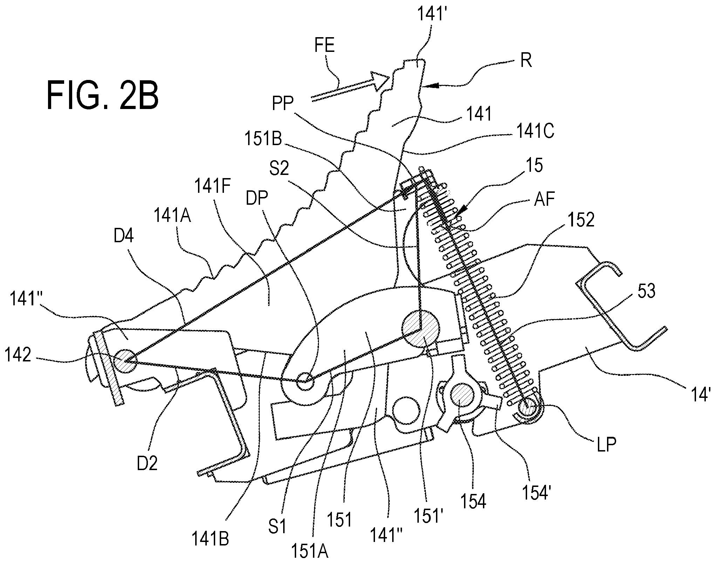

As a result, the knife 141 is in the up and working position engaging with the feeding rotor 133 and the incoming crop through the feeding channel 131
Figure 2B illustrates the cutting assembly 14, the knife 141 and trigger mechanism 151 from the cutting assembly 14. The knife 141 is shown is the retracted position R. The trigger mechanism 151 is in a rotated down position closer to the knife's rotation point 142 but crucially it is within the knife's hooking zone 143 for the pushing of the knife 141 up and down. The spring 152 is elongated. The knife selector mechanism 154 is positioned under the knife's trigger mechanism (lever 151) so the teeth 154' of the selector mechanism 154 rotate in order to position different teeth in various positions across the cutting assembly 14 so different combinations of knives may be selected.

In this example in this illustration, the selector mechanism tooth 154' is in position to block the trigger mechanism 151 from rotation which as a result prevents the trigger mechanism 151 from rotation and therefore the knife 141 is blocked from entering into the extracted position E.

## Claims

1. A baler or a loading wagon, comprising:
- a frame (10);
- a receiver (11), for receiving crops;
- a pick-up device (12), configured for picking-up the crops from a field;
- a feeding assembly (13), including:
a feeding channel (131), having an inlet (131A), for receiving the crops from the pick-up device (12), an outlet (131B), opened to the receiver (11) for feeding the crops to the receiver (11) along a feeding path (P) and a bottom floor (131C), including a plurality of slots (131C');
a feeding rotor (132), rotating in a feeding direction (F), to push the crops from the feeding channel (131) into the receiver (11) along the feeding path (P);
- a cutting assembly (14), which is configured to cut the crops passing through the feeding channel (131) and includes
a plurality of knives (141), each one pivoting around a respective knife rotation point (142), between an extracted position (E), where the knife (141) is at least partially inserted into a respective slot (131 C') of the bottom floor (131C) to protrude towards the feeding channel (131), and a retracted position (R), where the knife (141) is retracted below the bottom floor (131C);
for each knife of the plurality (141) of knives, a knife protection system (15), configured to retract the respective knife (141), selectively with respect to the other knives of the plurality (141) of knives, in response to an external force (EF) applied to the respective knife (141),
**characterized in that** each knife protection system (15) includes a lever (151), rotating around a rotation point (151') and connected to the respective knife (141) in a driving point (DP);
an absorber element (152), connected to the lever (151) and to the frame (10) in a pushing point (PP) and in a locking point (LP), respectively, and which is configured to apply an absorption force (AF) on the lever (151) to urge the respective knife (141) towards the extracted position (E);
wherein for each knife protection system (15), in the extracted position (E) of the knife (141), the driving point (DP) is spaced from the knife rotation point (142) of a first distance, and, in the retracted position (R) of the knife (141), the driving point (DP) is spaced from the knife rotation point (142) of a second distance, wherein the second distance is smaller than the first distance.

2. The baler or the loading wagon (1) according to claim 1, for each knife protection system (15), in the extracted position (E) of the knife (141), the pushing point (PP) is spaced from the knife rotation point (142) of a third distance, and, in the retracted position (R) of the knife (141), the pushing point (PP) is spaced from the knife rotation point (142) of a fourth distance, wherein the fourth distance is smaller than the third distance.

3. The baler or the loading wagon (1) according to claim 1 or 2, wherein, for each knife protection system (15), the driving point (DP), the rotation point (151') and the pushing point (PP) are reciprocally spaced in such a way that a driving segment (S1) between the driving point (DP) and the rotation point (151') is angularly spaced by an amplification angle (A1) from a pushing segment between the pushing point (PP) and the rotation point (151'), wherein the locking point (LP) and the pushing point (PP) are spaced with respect to the pushing segment (S2) in such a way that an action segment (S3) between the locking point (LP) and the pushing point (PP) is angularly spaced from the pushing segment (S2).

4. The baler or the loading wagon (1) according to claim 3, wherein the action segment (S3) is angularly spaced from the pushing segment (S2) by a lever angle (A2) that has a first value (A2'), in correspondence to the extracted position (E) of the respective knife (141), and a second value (A2"), in correspondence of the retracted position (R) of the respective knife (141), and wherein the first value (A2') of the laver angle (A2) is greater than the second value (A2") of the lever angle (A2).

5. The baler or the loading wagon (1) according to any of the preceding claims, wherein each knife (141) has a cutting side (141A), a bottom side (141B), a lateral side (141C), a first vertex (141'), between the cutting side (141A) and the lateral side (141C), a second vertex (141"), between the cutting side (141A) and bottom side (141B) and a third vertex (141‴), between the bottom side (141B) and the lateral side (141C) and wherein the knife rotation point (142) is placed on the second vertex (141") and wherein the driving point (DP) lies on the bottom side (141B) of the respective knife (141).

6. The baler or the loading wagon (1) according to any of the preceding claims, wherein, for each knife protection system (15), the driving point (DP) is movable on the knife (141) following a safety trajectory, and wherein the knife (141) comprises a safety guide (143), defining the correspondent safety trajectory and configured to house the lever (151) for guiding the driving point (DP) along the respective safety trajectory.

7. The baler or the loading wagon (1) according to claim 6, wherein, for each knife protection system (15), the safety guide (143) is on the bottom side (141B) of the respective knife (141).

8. The baler or the loading wagon (1) according to claim 6 or 7, wherein the safety guide (143) has a hook profile, surrounding the driving point (DP).

9. The baler or the loading wagon (1) according to any of the preceding claims, wherein each lever (151) has a first arm (151A), connected to the respective knife (141) in the driving point (DP), and a second arm (151B), connected to the absorber element (152) in the pushing point (PP).

10. The baler or the loading wagon (1) according to claim 9, wherein the first arm (151A) and the second arm (151B) are rigidly connected.

11. The baler or the loading wagon (1) according to claim 9 or 10, wherein each knife has a front face (141F) and a back face, and wherein the front face (141F) faces on the first arm (151A) and the back face faces on the second arm (151B).

12. The baler or the loading wagon (1) according to any of the preceding claims, wherein, in the retracted position (R) and/or in the extracted position (E) of the knife, the rotation point (151') is between the pushing point (PP) and the driving point (DP) along a transversal direction (T), perpendicular to the direction of the absorption force (AF).

13. A method for recover crops with a baler or a loading wagon (1) comprising the following steps:
- receiving crops into a receiver (11);
- picking-up corps from a field with a pick-up device (12);
- feeding the crops to the receiver with a feeding rotor (132) throughout a feeding channel (131), having an inlet (131A), for receiving the crops from the pick-up device (12), an outlet (131B), opened to the receiver (11) for feeding the crops to the receiver (11) along a feeding path (P) and a bottom floor (131C), including a plurality of slots (131C');
- cutting the crops passing through the feeding channel (131) with a plurality of knife (141);
- pivoting of each knife (141) around a respective knife rotation point, between an extracted position (E), where the knife (141) is at least partially inserted into a respective slot (131C') of the bottom floor (131C) to cross the feeding channel (131) transversally with respect to the feeding path (P), and a retracted position (R), where the knife (141) is retracted below the bottom floor (131C);
- protecting each knife (141) with a respective knife protection system (15), wherein the knife protection system (15) retracts the respective knife (141), selectively with respect to the other knives of the plurality (141) of knives, in response to an external force (EF),
wherein the protecting step includes:
- rotating a lever (151), connected to the respective knife (141) in a driving point (DP), around a rotating point (151');
- urging the respective knife (141) towards the extracted position (E), with an absorber element (152), connected to a frame (10) in a locking point (LP) and applying an absorption force (AF) on the lever (151) in a pushing point (PP), wherein for each knife protection system (15), as the knife (141) moves from the extracted position (E) towards the retracted position (R), the driving point (DP) approaches to the knife rotation point (142).

14. The method of claim 13, wherein, for each knife protection system (15), as the knife (141) moves from the extracted position (E) towards the retracted position (R), the pushing point (PP) approaches to the knife rotation point (142).

15. The method of claim 13 or 14, wherein, in the protecting step, the driving point (DP), the rotation point (151') and the pushing point (PP) are reciprocally spaced in such a way that a driving segment (S1) between the driving point (DP) and the rotation point (151') is angularly spaced by an amplification angle (A1) from a pushing segment between the pushing point (PP) and the rotation point (151').

## Patentansprüche

1. Ballenpresse oder Ladewagen, umfassend
- einen Rahmen (10);
- einen Sammelbehälter (11) zum Sammeln von Erntegut;
- eine Aufnahmevorrichtung (12), die ausgelegt ist, um das Erntegut von einem Feld aufzunehmen;
- eine Zuführungsvorrichtung (13), einschließend
einen Zuführungskanal (131), aufweisend einen Einlass (131A) zum Sammeln des Ernteguts von der Aufnahmevorrichtung (12), einen Auslass (131B), der zum Sammelbehälter (11) geöffnet ist, um das Erntegut dem Sammelbehälter (11) entlang eines Zuführungswegs (P) zuzuführen, und einen Unterboden (131C), einschließend eine Vielzahl von Schlitzen (131C');
einen Zuführungsrotor (132), der sich in eine Zuführungsrichtung (F) dreht, um das Erntegut vom Zuführungskanal (131) in den Sammelbehälter (11) entlang des Zuführungswegs (P) zu schieben;
- eine Schneidanordnung (14), die ausgelegt ist, um das durch den Zuführungskanal (131) geführte Erntegut zu schneiden, und die eine Vielzahl von Messern (141) umfasst, von denen ein jedes rund um einen jeweiligen Messerrotationspunkt (142) zwischen einer ausgefahrenen Position (E), in der das Messer (141) mindestens teilweise in einen jeweiligen Schlitz (131C') des Unterbodens (131C) eingefügt ist, um hinführend zum Zuführungskanal (131) hervorzustehen, und einer eingefahrenen Position (R), in der das Messer (141) unter dem Unterboden (131C) eingefahren ist, geschwenkt wird;
für ein jedes Messer der Vielzahl (141) von Messern ein Messerschutzsystem (15), das ausgelegt ist, um das jeweilige Messer (141) selektiv in Bezug auf die anderen Messer der Vielzahl (141) von Messern als Reaktion auf eine externe Kraft (EF), die auf das jeweilige Messer (141) ausgeübt wird, einzufahren, **dadurch gekennzeichnet, dass** ein jedes Messerschutzsystem (15) einen Hebel (151) einschließt, der sich rund um einen Rotationspunkt (151') dreht und mit dem jeweiligen Messer (141) in einem Antriebspunkt (DP) verbunden ist;
ein Dämpfungselement (152), das mit dem Hebel (151) und dem Rahmen (10) jeweils in einem Schiebepunkt (PP) und in einem Verriegelungspunkt (LP) verbunden und ausgelegt ist, um eine Dämpfungskraft (AF) auf den Hebel (151) auszuüben, um das jeweilige Messer (141) hinführend zur ausgefahrenen Position (E) zu forcieren, wobei der Antriebspunkt (DP) bei einem jeden Messerschutzsystem (15) in der ausgefahrenen Position (E) des Messers (141) vom Messerrotationspunkt (142) um einen ersten Abstand beabstandet ist und der Antriebspunkt (DP) in der eingefahrenen Position (R) des Messers (141) vom Messerrotationspunkt (142) um einen zweiten Abstand beabstandet ist, wobei der zweite Abstand kleiner ist als der erste Abstand.

2. Ballenpresse oder Ladewagen (1) nach Anspruch 1, wobei der Schiebepunkt (PP) bei einem jeden Messerschutzsystem (15) in der ausgefahrenen Position (E) des Messers (141) vom Messerrotationspunkt (142) um einen dritten Abstand beabestandet ist, und wobei der Schiebepunkt (PP) in der eingefahrenen Position (R) des Messers (141) vom Messerrotationspunkt (142) um einen vierten Abstand beabstandet ist, wobei der vierte Abstand kleiner ist als der dritte Abstand.

3. Ballenpresse oder Ladewagen (1) nach Anspruch 1 oder 2, wobei der Antriebspunkt (DP), der Rotationspunkt (151') und der Schiebepunkt (PP) bei jedem Messerschutzsystem (15) gegenseitig so beabstandet sind, dass ein Antriebssegment (S1) zwischen dem Antriebspunkt (DP) und dem Rotationspunkt (151') winkelig um einen Verstärkungswinkel (A1) von einem Schiebesegment zwischen dem Schiebepunkt (PP) und dem Rotationspunkt (151') beabstandet ist, wobei der Verriegelungspunkt (LP) und der Schiebepunkt (PP) in Bezug auf das Schiebesegment (S2) so beabstandet sind, dass ein Wirkungssegment (S3) zwischen dem Verriegelungspunkt (LP) und dem Schiebepunkt (PP) winkelig vom Schiebesegment (S2) beabstandet ist.

4. Ballenpresse oder Ladewagen (1) nach Anspruch 3, wobei das Wirkungssegment (S3) winkelig vom Schiebesegment (S2) um einen Hebelwinkel (A2) beabstandet ist, der einen ersten Wert (A2') an der ausgefahrenen Position (E) des jeweiligen Messers (141) und einen zweiten Wert (A2") an der eingefahrenen Position (R) des jeweiligen Messers (141) aufweist, und wobei der erste Wert (A2') des Hebelwinkels (A2) größer ist als der zweite Wert (A2") des Hebelwinkels (A2).

5. Ballenpresse oder Ladewagen (1) nach einem der vorhergehenden Ansprüche, wobei ein jedes Messer (141) eine Schneidseite (141A), eine Bodenseite (141B), eine seitliche Seite (141C), einen ersten Scheitel (141') zwischen der Schneidseite (141A) und der seitlichen Seite (141C), einen zweiten Scheitel (141") zwischen der Schneidseite (141A) und der Bodenseite (141B) und einen dritten Scheitel (141") zwischen der Bodenseite (141B) und der seitlichen Seite (141C) aufweist, und wobei der Messerrotationspunkt (142) auf dem zweiten Scheitel (141") platziert ist, und wobei der Antriebspunkt (DP) auf der Bodenseite (141B) des jeweiligen Messers (141) liegt.

6. Ballenpresse oder Ladewagen (1) nach einem der vorhergehenden Ansprüche, wobei der Antriebspunkt (DB) bei einem jeden Messerschutzsystem (15) auf dem Messer (141) bewegbar ist, folgend einer Sicherheitsbahn, und wobei das Messer (141) eine Sicherheitsführung (143) umfasst, die die entsprechende Sicherheitsbahn definiert und ausgelegt ist, um den Hebel (151) zum Führen des Antriebspunkts (DP) entlang der jeweiligen Sicherheitsbahn zu führen.

7. Ballenpresse oder Ladewagen (1) nach Anspruch 6, wobei sich die Sicherheitsführung (143) für ein jedes Messerschutzsystem (15) auf der Bodenseite (141B) des jeweiligen Messers (141) befindet.

8. Ballenpresse oder Ladewagen (1) nach Anspruch 6 oder 7, wobei die Sicherheitsführung (143) ein Hakenprofil aufweist, das den Antriebspunkt (DP) umgibt.

9. Ballenpresse oder Ladewagen (1) nach einem der vorhergehenden Ansprüche, wobei ein jeder Hebel (151) einen ersten Arm (151A) aufweist, der mit dem jeweiligen Messer (141) im Antriebspunkt (DP) verbunden ist, und einen zweiten Arm (151B), der mit dem Dämpfungselement (152) im Schiebepunkt (PP) verbunden ist.

10. Ballenpresse oder Ladewagen (1) nach Anspruch 9, wobei der erste Arm (151A) und der zweite Arm (151B) steif verbunden sind.

11. Ballenpresse oder Ladewagen (1) nach Anspruch 9 oder 10, wobei ein jedes Messer eine frontseitige Seitenfläche (141F) und eine rückseitige Seitenfläche aufweist, und wobei die frontseitige Seitenfläche (141F) auf den ersten Arm (151A) gerichtet ist und die rückseitige Seitenfläche auf den zweiten Arm (151B) gerichtet ist.

12. Ballenpresse oder Ladewagen (1) nach einem der vorhergehenden Ansprüche, wobei sich der Rotationspunkt (151') in der eingefahrenen Position (R) und/oder in der ausgefahrenen Position (E) des Messers zwischen dem Schiebepunkt (PP) und dem Antriebspunkt (DP) entlang einer Querrichtung (T) befindet, die rechtwinkelig zur Richtung der Dämpfungskraft (AF) angeordnet ist.

13. Verfahren zum Einbringen von Erntegut mit einer Ballenpresse oder einem Ladewagen (1), umfassend die folgenden Schritte:
- Sammeln des Ernteguts in einem Sammelbehälter (11);
- Aufnehmen von Erntegut von einem Feld mit einer Aufnahmevorrichtung (12);
- Zuführen des Ernteguts zu einem Sammelbehälter mit einem Zuführungsrotor (132) durch einen Zuführungskanal (131), aufweisend einen Einlass (131A) zum Sammeln des Ernteguts von der Aufnahmevorrichtung (12), einen Auslass (131B), der zum Sammelbehälter (11) geöffnet ist, um das Erntegut dem Sammelbehälter (11) entlang eines Zuführungswegs (P) zuzuführen, und einen Unterboden (131C), einschließend eine Vielzahl von Schlitzen (131C');
- Schneiden des Ernteguts, das durch den Zuführungskanal (131) geführt wird, mit einer Vielzahl von Messern (141);
- Schwenken eines jeden Messers (141) rund um einen jeweiligen Messerrotationspunkt zwischen einer ausgefahrenen Position (E), in der das Messer (141) mindestens teilweise in einen jeweiligen Schlitz (131C') des Unterbodens (131C) eingefügt ist, um den Zuführungskanal (131) quer in Bezug auf den Zuführungsweg (P) zu queren, und einer eingefahrenen Position (R), in der das Messer (141) unter dem Unterboden (131C) eingefahren ist;
- Schützen eines jeden Messers (141) mit einem jeweiligen Messerschutzsystem (15), wobei das Messerschutzsystem (15) das jeweilige Messer (141) selektiv in Bezug auf die anderen Messer der Vielzahl (141) von Messern als Reaktion auf eine externe Kraft (EF) einfährt, wobei der Schritt zum Schützen Folgendes einschließt:
- Drehen eines Hebels (151), der mit dem jeweiligen Messer (141) in einem Antriebspunkt (DP) verbunden ist, rund um einen Rotationspunkt (151');
- Forcieren des jeweiligen Messers (141) hinführend zur ausgefahrenen Position (E) mit einem Dämpfungselement (152), das mit einem Rahmen (10) in einem Verriegelungspunkt (LP) verbunden ist, und Ausüben einer Dämpfungskraft (AF) auf den Hebel (151) in einem Schiebepunkt (PP), wobei sich der Antriebspunkt (D) bei jedem Messerschutzsystem (15) dem Messerrotationspunkt (142) nähert, wenn sich das Messer (141) von der ausgefahrenen Position (E) hinführend zur eingefahrenen Position (R) bewegt.

14. Verfahren nach Anspruch 13, wobei sich der Schiebepunkt (PP) bei jedem Messerschutzsystem (15) dem Messerrotationspunkt (142) nähert, wenn sich das Messer (141) von der ausgefahrenen Position (E) hinführend zur eingefahrenen Position (R) bewegt.

15. Verfahren nach Anspruch 13 oder 14, wobei der Antriebspunkt (DP), der Rotationspunkt (151') und der Schiebepunkt (PP) im Schritt zum Schützen gegenseitig so beabstandet sind, dass ein Antriebssegment (S1) zwischen dem Antriebspunkt (DP) und dem Rotationspunkt (151') winkelig um einen Verstärkungswinkel (A1) vom Schiebesegment zwischen dem Schiebepunkt (PP) und dem Rotationspunkt (151') beabstandet ist.

## Revendications

1. Presse à balles ou wagon de chargement, comprenant :
- un châssis (10) ;
- un récepteur (11), pour recevoir les récoltes ;
- un dispositif de ramassage (12) configuré pour ramasser les récoltes à partir d'un champ ;
- un ensemble d'alimentation (13), incluant :
un canal d'alimentation (131), ayant une entrée (131A), pour recevoir les récoltes du dispositif de ramassage (12), une sortie (131B), ouverte vers le récepteur (11) pour alimenter les récoltes vers le récepteur (11) le long d'un parcours d'alimentation (P) et d'un plancher inférieur (131C), incluant une pluralité de fentes (131C') ;
un rotor d'alimentation (132), tournant dans une direction d'alimentation (F), pour pousser les récoltes du canal d'alimentation (131) dans le récepteur (11) le long du parcours d'alimentation (P) ;
- un ensemble de coupe (14), qui est configuré pour couper les récoltes passant à travers le canal d'alimentation (131) et inclut une pluralité de lames (141), chacun pivotant autour d'un point de rotation de lame (142) respectif, entre une position extraite (E), où la lame (141) est au moins partiellement insérée dans une fente (131C') respective du plancher inférieur (131C) pour faire saillie vers le canal d'alimentation (131), et une position rétractée (R), où la lame (141) est rétractée sous le plancher inférieur (131C) ;
pour chaque lame de la pluralité (141) de lames, un système de protection de lame (15), configuré pour rétracter la lame (141) respective, sélectivement par rapport aux autres lames de la pluralité (141) de lames, en réponse à une force externe (EF) appliquée à la lame (141) respective, **caractérisée en ce que** chaque système de protection de lame (15) inclut un levier (151), tournant autour d'un point de rotation (151') et relié à la lame (141) respective en un point d'entraînement (DP) ;
un élément d'absorption (152), relié au levier (151) et au cadre (10) en un point de poussée (PP) et en un point de verrouillage (LP), respectivement, et qui est configuré pour appliquer une force d'absorption (AF) sur le levier (151) pour pousser la lame (141) respective vers la position extraite (E) ; dans lequel, pour chaque système de protection de lame (15), dans la position extraite (E) de la lame (141), le point d'entraînement (DP) est espacé du point de rotation de la lame (142) d'une première distance, et, dans la position rétractée (R) de la lame (141), le point d'entraînement (DP) est espacé du point de rotation de la lame (142) d'une seconde distance, dans lequel la seconde distance est inférieure à la première distance.

2. Presse à balles ou wagon de chargement (1) selon la revendication 1, pour chaque système de protection de lame (15), dans la position extraite (E) de la lame (141), le point de poussée (PP) est espacé du point de rotation de la lame (142) d'une troisième distance, et, dans la position rétractée (R) de la lame (141), le point de poussée (PP) est espacé du point de rotation de la lame (142) d'une quatrième distance, dans lequel la quatrième distance est inférieure à la troisième distance.

3. Presse à balles ou wagon de chargement (1) selon la revendication 1 ou 2, dans lequel, pour chaque système de protection de lame (15), le point d'entraînement (DP), le point de rotation (151') et le point de poussée (PP) sont mutuellement espacés d'une manière telle qu'un segment d'entraînement (S1) entre le point d'entraînement (DP) et le point de rotation (151') est angulairement espacé d'un angle d'amplification (A1) par rapport à un segment de poussée entre le point de poussée (PP) et le point de rotation (151'), dans lequel le point de verrouillage (LP) et le point de poussée (PP) sont espacés par rapport au segment de poussée (S2) d'une manière telle qu'un segment d'action (S3) entre le point de verrouillage (LP) et le point de poussée (PP) est angulairement espacé du segment de poussée (S2).

4. Presse à balles ou wagon de chargement (1) selon la revendication 3, dans laquelle le segment d'action (S3) est espacé angulairement du segment de poussée (S2) par un angle de levier (A2) qui a une première valeur (A2'), en correspondance avec la position extraite (E) de la lame (141) respective, et une seconde valeur (A2"), en correspondance avec la position rétractée (R) de la lame (141) respective, et dans laquelle la première valeur (A2') de l'angle de levier (A2) est supérieure à la seconde valeur (A2") de l'angle de levier (A2).

5. Presse à balles ou wagon de chargement (1) selon l'une quelconque des revendications précédentes, dans lequel chaque lame (141) a un côté coupant (141A), un côté inférieur (141B), un côté latéral (141C), un premier sommet (141'), entre le côté coupant (141A) et le côté latéral (141C), un deuxième sommet (141"), entre le côté coupant (141A) et le côté inférieur (141B) et un troisième sommet (141"), entre le côté inférieur (141B) et le côté latéral (141C) et dans lequel le point de rotation de la lame (142) est placé sur le deuxième sommet (141") et dans lequel le point d'entraînement (DP) se trouve sur le côté inférieur (141B) de la lame respective .

6. Presse à balles ou wagon de chargement (1) selon l'une quelconque des revendications précédentes, dans laquelle, pour chaque système de protection de lame (15), le point d'entraînement (DP) est mobile sur la lame (141) suivant une trajectoire de sécurité, et dans laquelle la lame (141) comprend un guide de sécurité (143), définissant la trajectoire de sécurité correspondante et configurée pour loger le levier (151) pour guider le point d'entraînement (DP) le long de la trajectoire de sécurité respective.

7. Presse à balles ou wagon de chargement (1) selon la revendication 6, dans lequel, pour chaque système de protection de lame (15), le guide de sécurité (143) est sur le côté inférieur (141B) de la lame (141) respective.

8. Presse à balles ou wagon de chargement (1) selon la revendication 6 ou 7, dans laquelle le guide de sécurité (143) a un profil en crochet, entourant le point d'entraînement (DP).

9. Presse à balles ou wagon de chargement (1) selon l'une quelconque des revendications précédentes, dans lequel chaque levier (151) a un premier bras (151A), connecté à la lame (141) respective dans le point d'entraînement (DP), et un second bras (151B), connecté à l'élément absorbeur (152) dans le point de poussée (PP).

10. Presse à balles ou wagon de chargement (1) selon la revendication 9, dans lequel le premier bras (151A) et le deuxième bras (151B) sont reliés rigidement.

11. Presse à balles ou wagon de chargement (1) selon la revendication 9 ou 10, dans lequel chaque lame a une face avant (141F) et une face arrière, et dans lequel la face avant (141F) fait face au premier bras (151A) et la face arrière fait face au second bras (151B).

12. Presse à balles ou wagon de chargement (1) selon l'une quelconque des revendications précédentes, dans laquelle, dans la position rétractée (R) et/ou dans la position extraite (E) de la lame, le point de rotation (151') se trouve entre le point de poussée (PP) et le point d'entraînement (DP) le long d'une direction transversale (T), perpendiculaire à la direction de la force d'absorption (AF).

13. Procédé de récupération de récoltes avec une presse à balles ou un wagon de chargement (1) comprenant les étapes suivantes :
- recevoir les récoltes dans un récepteur (11) ;
- ramasser les récoltes d'un champ avec un dispositif de ramassage (12) ;
- alimenter les récoltes vers le récepteur avec un rotor d'alimentation (132) à travers un canal d'alimentation (131), ayant une entrée (131A), pour recevoir les récoltes à partir du dispositif de ramassage (12), une sortie (131B), ouverte vers le récepteur (11) pour alimenter les récoltes vers le récepteur (11) le long d'un parcours d'alimentation (P) et d'un plancher inférieur (131C), incluant une pluralité de fentes (131C') ;
- couper les récoltes passant par le canal d'alimentation (131) avec une pluralité de
lames (141) ;
- faire pivoter chaque lame (141) autour d'un point de rotation de la lame respective, entre une position extraite (E), où la lame (141) est au moins partiellement insérée dans une fente respective (131C') du plancher inférieur (131C) pour traverser le canal d'alimentation (131) transversalement par rapport au parcours d'alimentation (P), et une position rétractée (R), où la lame (141) est rétractée sous le plancher inférieur (131C) ;
- protéger chaque lame (141) avec un système de protection de lame respectif (15), dans lequel le système de protection de lame (15) rétracte la lame (141) respective , sélectivement par rapport aux autres lames de la pluralité (141) de lames, en réponse à une force externe (EF), dans lequel l'étape de protéger inclut :
- faire tourner un levier (151), relié à la lame (141) respective en un point d'entraînement (DP), autour d'un point de rotation (151') ;
- presser la lame (141) respective vers la position extraite (E), avec un élément absorbeur (152), relié à un cadre (10) en un point de verrouillage (LP) et appliquer une force d'absorption (AF) sur le levier (151) en un point de poussée (PP), dans lequel pour chaque système de protection de lame (15), lorsque la lame (141) se déplace de la position extraite (E) vers la position rétractée (R), le point d'entraînement (DP) se rapproche du point de rotation de la lame (142).

14. Procédé selon la revendication 13, dans lequel, pour chaque système de protection de lame (15), lorsque la lame (141) se déplace de la position extraite (E) vers la position rétractée (R), le point de poussée (PP) se rapproche du point de rotation de la lame (142).

15. Procédé selon la revendication 13 ou 14, dans lequel, dans l'étape de protéger, le point d'entraînement (DP), le point de rotation (151') et le point de poussée (PP) sont mutuellement espacés de telle sorte qu'un segment d'entraînement (S1) entre le point d'entraînement (DP) et le point de rotation (151') est angulairement espacé d'un angle d'amplification (A1) par rapport à un segment de poussée entre le point de poussée (PP) et le point de rotation (151').
